# EUROPÄISCHE PATENTSCHRIFT

(11) **EP 3 276 992 B1**
(45) Veröffentlichungstag und Bekanntmachung des Hinweises auf die Patenterteilung: **12.12.2018**
(21) Anmeldenummer: 16181908.1
(22) Anmeldetag: 29.07.2016
(51) Int. Cl.: H04W 8/18

(54) **STEUERUNGSSERVER IN EINEM KOMMUNIKATIONSNETZWERK**
CONTROL SERVER IN A COMMUNICATION NETWORK
SERVEUR DE COMMANDE DANS UN RESEAU DE COMMUNICATION

(43) Veröffentlichungstag der Anmeldung: 31.01.2018
(73) Patentinhaber: Deutsche Telekom AG, 53113 Bonn (DE)
(72) Erfinder: Kaliner, Stefan, 53639 Königswinter (DE)
(74) Vertreter: Patentship Patentanwaltsgesellschaft mbH

(56) Entgegenhaltungen:
- EP-A1- 2 448 301
- EP-A2- 1 117 083
- WO-A1-2016/022228

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdatete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise ein Datenvolumen für das mit einem eSIM ausgestatteten mobilen Kommunikationsgerät im Rahmen eines Vertragsverhältnisses.

Verfügt ein mobiles Kommunikationsgerät, beispielswies im Kontext von Internet of Things über ein eSIM, so ist dem eSIM ein Profil zugeordnet, das entsprechend einem Vertragsverhältnis beispielsweise ein Datenvolumen für das eSIM definiert.

Es ist daher die Aufgabe der Erfindung, ein effizientes Konzept zur Steuerung von Datenvolumen für eine Gruppe von elektronischen Teilnehmeridentifikationsmodulen, welche beispielsweise in unterschiedlichen Kommunikationsgeräten eines Benutzers verbaut sind.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die Erfindung basiert auf der Erkenntnis, dass die obige Aufgabe durch eine Aufteilung eines Datenvolumens, das einer Gruppe von elektronischen Teilnehmeridentifikationsmodulen zur Verfügung steht, gelöst werden kann. Dadurch wird die für die Gruppe von elektronischen Teilnehmeridentifikationsmodulen verfügbare Bandbreite auf die elektronischen Teilnehmeridentifikationsmodule verteilt. Die Verteilung des Datenvolumens kann dynamisch oder provisioniert erfolgen.

Gemäß einem ersten Aspekt betrifft die Erfindung einen Steuerungsserver in einem Kommunikationsnetzwerk, wobei der Steuerungsserver zur Verteilung von einem Datenvolumen, das einer Gruppe von elektronischen Teilnehmeridentitätsmodulen zugeordnet ist, vorgesehen ist, wobei die Gruppe von elektronischen Teilnehmeridentitätsmodulen ein erstes Teilnehmeridentitätsmodul und ein zweites Teilnehmeridentitätsmodul aufweist, mit: einer Kommunikationsschnittstelle zum Empfangen einer ersten Identifikation des ersten Teilnehmeridentitätsmoduls und/oder einer zweiten Identifikation des zweiten elektronischen Teilnehmeridentitätsmoduls; und einem Prozessor, welcher ausgebildet ist, dem ersten elektronischen Teilnehmeridentitätsmodul ein erstes Teildatenvolumen des Datenvolumens und/oder dem zweiten elektronischen Teilnehmeridentitätsmodul ein zweites Teildatenvolumen des Datenvolumens gemäß einer elektronischen Verteilungsregel zuzuordnen.

In einer Ausführungsform ist der Prozessor ausgebildet, das erste Teildatenvolumen und/oder das zweite Teildatenvolumen zu bestimmen oder aus einem Speicher des Steuerungsservers auszulesen.

In einer Ausführungsform ist der Prozessor ausgebildet, das erste Teildatenvolumen und/oder das zweite Teildatenvolumen in Abhängigkeit von Servicequalitätsanforderungen (QoS: Quality of Service) des jeweiligen elektronischen Teilnehmeridentitätsmoduls zu bestimmen.

In einer Ausführungsform ist das jeweilige elektronische Teilnehmeridentitätsmodul ein eSIM.

In einer Ausführungsform ist der Prozessor ausgebildet, das erste Teildatenvolumen und/oder das zweite Teildatenvolumen gemäß einem Volumenverteilungsschlüssel, beispielsweise prozentual oder absolut, welcher die Verteilung des Datenvolumens auf die elektronischen Teilnehmeridentitätsmodule der Gruppe von elektronischen Teilnehmeridentitätsmodulen vorgibt und der Gruppe von elektronischen Teilnehmeridentitätsmodulen zugeordnet ist, zu bestimmen.

In einer Ausführungsform ist Prozessor ausgebildet, das erste Teildatenvolumen und/oder das zweite Teildatenvolumen in Abhängigkeit von einem verbrauchten Datenvolumen, das dem ersten elektronischen Teilnehmeridentitätsmodul zugeordnet ist, und einem verbrauchten Datenvolumen, das dem zweiten elektronischen Teilnehmeridentitätsmodul zugeordnet ist, zu bestimmen. Die Angabe über das jeweils verbrauchte Datenvolumen kann beispielsweise durch den Steuerungsserver bei einer Basisstation, welche den Datenverkehr des jeweiligen elektronischen Teilnehmeridentitätsmoduls handhabt, abgerufen werden.

In einer Ausführungsform ist dem ersten elektronischen Teilnehmeridentitätsmodul ein erstes Grunddatenvolumen zugeordnet und/oder wobei dem zweiten elektronischen Teilnehmeridentitätsmodul ein zweites Grunddatenvolumen zugeordnet ist, und wobei der Prozessor ausgebildet ist, das erste Teildatenvolumen in Abhängigkeit von einem Restdatenvolumen, das sich aus einer Differenz zwischen dem ersten Grunddatenvolumen und dem Restdatenvolumen ergibt, und/oder das zweite Teildatenvolumen in Abhängigkeit von einem Restdatenvolumen, das sich aus einer Differenz zwischen dem zweiten Grunddatenvolumen und dem Restdatenvolumen ergibt, zu bestimmen.

In einer Ausführungsform ist der Prozessor ausgebildet, das jeweilige Teildatenvolumen zu bestimmen, falls das jeweilige Restdatenvolumen einen Volumenschwellwert erreicht oder unterschreitet.

In einer Ausführungsform ist der Prozessor ausgebildet, das erste Teildatenvolumen und/oder das zweite Teildatenvolumen in Abhängigkeit von einem Datenvolumenverbrauch pro Zeiteinheit, das dem ersten elektronischen Teilnehmeridentitätsmodul und/oder dem zweiten elektronischen Teilnehmeridentitätsmodul zugeordnet ist, oder in Abhängigkeit von einer Kommunikationsanwendung, insbesondere einer Echtzeitanwendung, welche dem jeweiligen Teilnehmeridentitätsmodul zugeordnet ist, oder in Abhängigkeit von einem elektronischen Dienst, welcher dem jeweiligen Teilnehmeridentitätsmodul zugeordnet ist, zu bestimmen.

In einer Ausführungsform ist der Prozessor ausgebildet, das erste Teildatenvolumen und/oder das zweite Teildatenvolumen vorbestimmt, insbesondere provisioniert, oder dynamisch in Abhängigkeit von einem gegenwärtigen Datenvolumenverbrauch, welcher dem jeweiligen elektronischen Teilnehmeridentitätsmodul zugeordnet ist, zu bestimmen.

In einer Ausführungsform ist die Kommunikationsschnittstelle ausgebildet, eine Angabe über das jeweils verbrauchte Datenvolumen von einer Netzwerkentität, insbesondere von einer Basisstation, zu empfangen.

In einer Ausführungsform ist die Kommunikationsschnittstelle ausgebildet, eine Angabe über das erste Teildatenvolumen und/oder eine Angabe über das zweite Teildatenvolumen an eine Netzwerkentität, welche einen Datenvolumenverbrauch überwacht, oder an eine Basisstation, auszusenden.

In einer Ausführungsform ist die erste Identifikation eine elektronische Identifikation (eID) oder eine Teilnehmerkennung, insbesondere IMSI, des ersten elektronischen Teilnehmeridentitätsmoduls und/oder wobei die zweite Identifikation eine elektronische Identifikation (eID) oder eine Teilnehmerkennung, insbesondere IMSI, des zweiten elektronischen Teilnehmeridentitätsmoduls ist, und/oder wobei das jeweilige elektronische Teilnehmeridentitätsmodul ein eSIM ist.

In einer Ausführungsform ist der Steuerungsserver in einem Kommunikationsnetzwerk, angeordnet.

Gemäß einem zweiten Aspekt betrifft die Erfindung ein Verfahren zum Verteilen von einem Datenvolumen, das einer Gruppe von elektronischen Teilnehmeridentitätsmodulen zugeordnet ist, wobei die Gruppe von elektronischen Teilnehmeridentitätsmodulen ein erstes Teilnehmeridentitätsmodul und ein zweites Teilnehmeridentitätsmodul aufweist, mit: Empfangen einer ersten Identifikation des ersten Teilnehmeridentitätsmoduls und/oder einer zweiten Identifikation des zweiten Teilnehmeridentitätsmoduls; Zuordnen eines ersten Teildatenvolumens des Datenvolumens zu dem ersten elektronischen Teilnehmeridentitätsmodul; und/oder Zuordnen eines zweiten Teildatenvolumens des Datenvolumens zu dem zweiten elektronischen Teilnehmeridentitätsmodul.

In einer Ausführungsform werden das erste Teildatenvolumen und/oder das zweite Teildatenvolumen durch einen Steuerungsserver, insbesondere durch den Steuerungsserver nach dem ersten Aspekt, zugeordnet und/oder bestimmt.

In einer Ausführungsform wird das Verfahren durch den Steuerungsserver nach dem ersten Aspekt bestimmt.

Gemäß einem dritten Aspekt betrifft die Erfindung ein Subnetzwerk eines Kommunikationsnetzwerks mit einer Mehrzahl von Subnetzwerken, insbesondere von Punkt-zu-Punkt-Subnetzwerken, wobei das Subnetzwerk zum Verteilen von einem Datenvolumen, das einer Gruppe von elektronischen Teilnehmeridentitätsmodulen zugeordnet ist, vorgesehen ist, wobei die Gruppe von elektronischen Teilnehmeridentitätsmodulen ein erstes Teilnehmeridentitätsmodul und ein zweites Teilnehmeridentitätsmodul aufweist, mit dem Steuerungsserver nach dem ersten Aspekt, wobei der Steuerungsserver ausschließlich über das Subnetzwerk adressierbar ist. Hierzu kann dem Steuerungsserver in dem Subnetzwerk ein Router vorgeschaltet werden. Das Subnetzwerk kann zudem eine Subnetzwerk-Kennung aufweisen.

In einer Ausführungsform ist das Subnetzwerk ein Punkt-zu-Punkt-Subnetzwerk oder ein Slice eines 5G-Kommunikationsnetzwerks ist.

In einer Ausführungsform ist der Steuerungsserver ausgebildet, eine Angabe über das erste Teildatenvolumen an ein weiteres Subnetzwerk des Kommunikationsnetzwerks auszusenden, das für eine Kommunikation des ersten elektronischen Teilnehmeridentitätsmoduls vorgesehen ist, und/oder wobei der Steuerungsserver vorgesehen ist, eine Angabe über das zweite Teildatenvolumen an ein weiteres Subnetzwerk des Kommunikationsnetzwerks auszusenden, das für eine Kommunikation des zweiten elektronischen Teilnehmeridentitätsmoduls vorgesehen ist. Die weiteren Subnetzwerke können 5G-Slices sein.

Weitere Ausführungsbeispiele werden Bezug nehmend auf die beiliegenden Figuren erläutert. Es zeigen:
- Fig. 1: einen Steuerungsserver; und
- Fig. 2: ein Subnetzwerk.

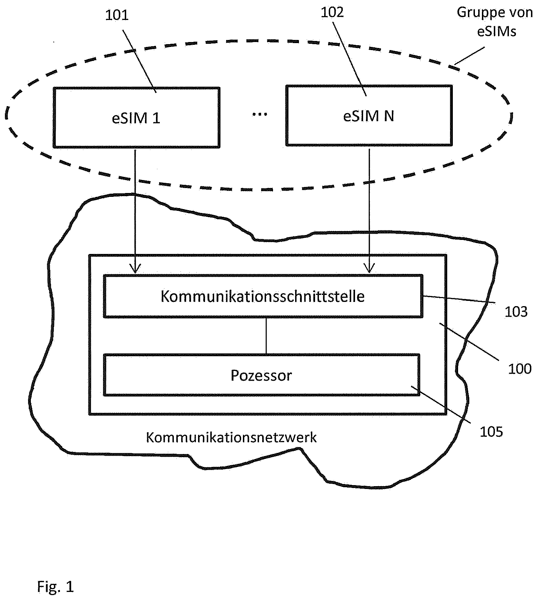

Fig. 1 zeigt Steuerungsserver 100 zur Verteilung von einem Datenvolumen, das einer Gruppe von elektronischen Teilnehmeridentitätsmodulen zugeordnet ist, wobei die Gruppe von elektronischen Teilnehmeridentitätsmodulen ein erstes Teilnehmeridentitätsmodul 101 und ein zweites Teilnehmeridentitätsmodul 102 aufweist, beispielsweise eSIM.

Der Steuerungsserver 100 umfasst eine Kommunikationsschnittstelle 103, beispielsweise eine LTE- oder UMTS-Kommunikationsschnittstelle, zum Empfangen einer ersten Identifikation des ersten Teilnehmeridentitätsmoduls 101 und/oder einer zweiten Identifikation des zweiten Teilnehmeridentitätsmoduls 102 und einen Prozessor 105, welcher ausgebildet ist, dem ersten elektronischen Teilnehmeridentitätsmodul 101 ein erstes Teildatenvolumen des Datenvolumens und/oder dem zweiten elektronischen Teilnehmeridentitätsmodul 102 ein zweites Teildatenvolumen des Datenvolumens gemäß einer elektronischen Verteilungsregel zuzuordnen.

Das Datenvolumen kann der Gruppe von elektronischen Teilnehmeridentitätsmodulen vertragsgemäß zugeordnet sein, wobei die Verteilung des Datenvolumens auf die elektronischen Teilnehmeridentitätsmodule durch den Steuerungsserver 100 bewirkt werden kann.

Die elektronischen Teilnehmeridentitätsmodule 101, 102 könne beispielsweise Kommunikationsprofile, z.B. eSIM-Profile aufweisen, in welchen die Priorisierung der elektronischen Teilnehmeridentitätsmodule untereinander bezüglich des zu verteilenden Datenvolumens indiziert ist. Hierbei kann beispielsweise ein Verteilungsschlüssel, nach welchem das Datenvolumen auf die elektronischen Teilnehmeridentitätsmodule 101, 102 verteilt werden kann, vorgegeben werden. Der Steuerungsserver 100 kann in einer Ausführungsform auf der Basis einer Profilinformation, welche die Kommunikationsprofile betrifft, das Datenvolumen auf die elektronischen Teilnehmeridentitätsmodule verteilen und den elektronischen Teilnehmeridentitätsmodulen 101, 102 jeweils ein Teildatenvolumen zuteilen.

Der Steuerungsserver 100 kann die Verteilung des Datenvolumens jedoch auch statisch oder dynamisch vorsehen.

Der Steuerungsserver 100 kann in einem Mobilfunknetzwerk, beispielsweise LTE oder UMTS, angeordnet sein und mit Entitäten des Mobilfunknetzwerks kommunizieren.

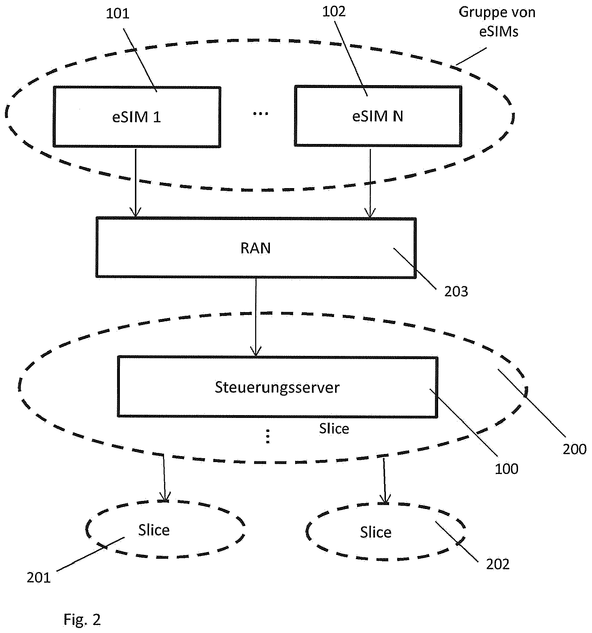

Die Funktion des Steuerungsservers 100 kann jedoch durch ein Subnetzwerk, z.B. Slice, eines 5G-Kommunikationsnetzwerks, beispielsweise als Dienst implementiert werde, wie es in Fig. 2 dargestellt ist.

In einer Ausführungsform kann ein Benutzer, beispielsweise über ein Portal, das Datenvolumen selbst auf die eSIMs 101, 102 verteilen bzw. den eSIMs 101, 102 zuordnen.

In einer Ausführungsform kann die Verteilung des Datenvolumens auf die eSIMs gerätespezifisch in Abhängigkeit von einer Geräteart der Kommunikationsgeräte mit den eSIMs 101, 102 vorgenommen werden. Hierbei kann beispielsweise ein Kommunikationsgerät, das in einem Haushaltsgerät implementiert ist, weniger Teildatenvolumen erhalten als ein Smartphone mit der eSIM.

Die elektronischen Teilnehmeridentitätsmodule 101, 102 sind beispielsweise als eSIMs bzw. eUICCs in mobilen oder stationären Kommunikationsgeräten implementiert.

Bei einer povisionierten Zuordnung kann beispielsweise die Bandbreite im Vorfeld fest auf die eSIMs verteilt werden, beispielsweis in Abhängigkeit von einer Geräteart oder von zu erwartenden Diensten.

Fig. 2 zeigt Subnetzwerk 200 eines Kommunikationsnetzwerks mit einer Mehrzahl von Subnetzwerken, insbesondere von Punkt-zu-Punkt-Subnetzwerken bzw. Slices, wobei das Subnetzwerk 200 zum Verteilen von einem Datenvolumen, das einer Gruppe von elektronischen Teilnehmeridentitätsmodulen zugeordnet ist, vorgesehen ist. In dem Subnetzwerk ist der Steuerungsserver 100 angeordnet und bevorzugt ausschließlich über das Subnetzwerk 200 bzw. über die Subnetzwerk-Adresse, adressierbar ist. Das Subnetzwerk 200 ist bevorzugt ein Punkt-zu-Punkt-Subnetzwerk oder ein Slice eines 5G-Kommunikationsnetzwerks. Das Subnetzwerk kann ferner einen Funkzugang bzw. ein Funkzugangsnetzwerk (RAN: Radio Access Network) implementieren.

In einer Ausführungsform ist Steuerungsserver 100 ausgebildet, eine Angabe über das erste Teildatenvolumen an ein weiteres Subnetzwerk 201 des Kommunikationsnetzwerks auszusenden, das für eine Kommunikation des ersten elektronischen Teilnehmeridentitätsmoduls 101 vorgesehen ist, und/oder wobei der Steuerungsserver 100 vorgesehen ist, eine Angabe über das zweite Teildatenvolumen an ein weiteres Subnetzwerk 202 des Kommunikationsnetzwerks auszusenden, das für eine Kommunikation des zweiten elektronischen Teilnehmeridentitätsmoduls 102 vorgesehen ist. Die Subnetzwerke 201, 202 können beispielsweise unterschiedliche Dienste eines 5G-Kommunikationsnetzwerks implementieren.

In einer Ausführungsform ist das Subnetzwerk 200 über ein Funkzugangsnetzwerk 203 (RAN) erreichbar.

## Patentansprüche

1. Steuerungsserver (100) in einem Kommunikationsnetzwerk, wobei der Steuerungsserver zur Verteilung von einem Datenvolumen, das einer Gruppe von elektronischen Teilnehmeridentitätsmodulen zugeordnet ist, vorgesehen ist, wobei die Gruppe von elektronischen Teilnehmeridentitätsmodulen ein erstes Teilnehmeridentitätsmodul (101) und ein zweites Teilnehmeridentitätsmodul (102) aufweist, mit:
einer Kommunikationsschnittstelle (103) zum Empfangen einer ersten Identifikation des ersten Teilnehmeridentitätsmoduls (101) und/oder einer zweiten Identifikation des zweiten Teilnehmeridentitätsmoduls (102); und
einem Prozessor (105), welcher ausgebildet ist, dem ersten elektronischen Teilnehmeridentitätsmodul (101) ein erstes Teildatenvolumen des Datenvolumens und/oder dem zweiten elektronischen Teilnehmeridentitätsmodul (102) ein zweites Teildatenvolumen des Datenvolumens gemäß einer elektronischen Verteilungsregel zuzuordnen.

2. Steuerungsserver (100) nach Anspruch 1, wobei der Prozessor (105) ausgebildet ist, das erste Teildatenvolumen und/oder das zweite Teildatenvolumen zu bestimmen oder aus einem Speicher des Steuerungsservers (100) auszulesen.

3. Steuerungsserver (100) nach einem der vorstehenden Ansprüche, wobei der Prozessor (105) ausgebildet ist, das erste Teildatenvolumen und/oder das zweite Teildatenvolumen gemäß einem Volumenverteilungsschlüssel, welcher die Verteilung des Datenvolumens auf die elektronischen Teilnehmeridentitätsmodule (101, 102) der Gruppe von elektronischen Teilnehmeridentitätsmodulen vorgibt und der Gruppe von elektronischen Teilnehmeridentitätsmodulen zugeordnet ist, zu bestimmen.

4. Steuerungsserver (100) nach einem der vorstehenden Ansprüche, wobei der Prozessor (105) ausgebildet ist, das erste Teildatenvolumen und/oder das zweite Teildatenvolumen in Abhängigkeit von einem verbrauchten Datenvolumen, das dem ersten elektronischen Teilnehmeridentitätsmodul (101) zugeordnet ist, und einem verbrauchten Datenvolumen, das dem zweiten elektronischen Teilnehmeridentitätsmodul (101) zugeordnet ist, zu bestimmen.

5. Steuerungsserver (100) nach Anspruch 4, wobei dem ersten elektronischen Teilnehmeridentitätsmodul (101) ein erstes Grunddatenvolumen zugeordnet ist und/oder wobei dem zweiten elektronischen Teilnehmeridentitätsmodul (102) ein zweites Grunddatenvolumen zugeordnet ist, und wobei der Prozessor (105) ausgebildet ist, das erste Teildatenvolumen in Abhängigkeit von einem Restdatenvolumen, das sich aus einer Differenz zwischen dem ersten Grunddatenvolumen und dem Restdatenvolumen ergibt, und/oder das zweite Teildatenvolumen in Abhängigkeit von einem Restdatenvolumen, das sich aus einer Differenz zwischen dem zweiten Grunddatenvolumen und dem Restdatenvolumen ergibt, zu bestimmen.

6. Steuerungsserver (100) nach Anspruch 5, wobei der Prozessor (105) ausgebildet ist, das jeweilige Teildatenvolumen zu bestimmen, falls das jeweilige Restdatenvolumen einen Volumenschwellwert erreicht oder unterschreitet.

7. Steuerungsserver (100) nach einem der vorstehenden Ansprüche, wobei der Prozessor (105) ausgebildet ist, das erste Teildatenvolumen und/oder das zweite Teildatenvolumen in Abhängigkeit von einem Datenvolumenverbrauch pro Zeiteinheit, das dem ersten elektronischen Teilnehmeridentitätsmodul (101) und/oder dem zweiten elektronischen Teilnehmeridentitätsmodul (102) zugeordnet ist, oder in Abhängigkeit von einer Kommunikationsanwendung, insbesondere einer Echtzeitanwendung, welche dem jeweiligen Teilnehmeridentitätsmodul (101, 102) zugeordnet ist, oder in Abhängigkeit von einem elektronischen Dienst, welcher dem jeweiligen Teilnehmeridentitätsmodul (101, 102) zugeordnet ist, zu bestimmen.

8. Steuerungsserver (100) nach einem der vorstehenden Ansprüche, wobei der Prozessor (105) ausgebildet ist, das erste Teildatenvolumen und/oder das zweite Teildatenvolumen vorbestimmt, insbesondere provisioniert, oder dynamisch in Abhängigkeit von einem gegenwärtigen Datenvolumenverbrauch, welcher dem jeweiligen elektronischen Teilnehmeridentitätsmodul (101, 102) zugeordnet ist, zu bestimmen.

9. Steuerungsserver (100) nach Anspruch 8, wobei die Kommunikationsschnittstelle (103) ausgebildet ist, eine Angabe über das jeweils verbrauchte Datenvolumen von einer Netzwerkentität, insbesondere von einer Basisstation, zu empfangen.

10. Steuerungsserver nach (100) einem der vorstehenden Ansprüche, wobei die Kommunikationsschnittstelle (103) ausgebildet ist, eine Angabe über das erste Teildatenvolumen und/oder eine Angabe über das zweite Teildatenvolumen an eine Netzwerkentität, welche einen Datenvolumenverbrauch überwacht, oder an eine Basisstation, auszusenden.

11. Steuerungsserver (100) nach einem der vorstehenden Ansprüche, wobei die erste Identifikation eine elektronische Identifikation (eID) oder eine Teilnehmerkennung, insbesondere IMSI, des ersten elektronischen Teilnehmeridentitätsmoduls (101) und wobei die zweite Identifikation eine elektronische Identifikation (eID) oder eine Teilnehmerkennung, insbesondere IMSI, des zweiten elektronischen Teilnehmeridentitätsmoduls (102) ist, und/oder wobei das jeweilige elektronische Teilnehmeridentitätsmodul ein eSIM ist.

12. Verfahren zum Verteilen von einem Datenvolumen, das einer Gruppe von elektronischen Teilnehmeridentitätsmodulen zugeordnet ist, wobei die Gruppe von elektronischen Teilnehmeridentitätsmodulen ein erstes Teilnehmeridentitätsmodul (101) und ein zweites Teilnehmeridentitätsmodul (102) aufweist, mit:
Empfangen einer ersten Identifikation des ersten Teilnehmeridentitätsmoduls (101) und/oder einer zweiten Identifikation des zweiten Teilnehmeridentitätsmoduls (102);
Zuordnen eines ersten Teildatenvolumens des Datenvolumens zu dem ersten elektronischen Teilnehmeridentitätsmodul (101); und/oder
Zuordnen eines zweiten Teildatenvolumens des Datenvolumens zu dem zweiten elektronischen Teilnehmeridentitätsmodul (102).

13. Verfahren nach Anspruch 12, wobei das erste Teildatenvolumen und/oder das zweite Teildatenvolumen durch einen Steuerungsserver, insbesondere durch den Steuerungsserver (100) nach einem der Ansprüche 1 bis 11, zugeordnet und/oder bestimmt werden.

14. Subnetzwerk (200) eines Kommunikationsnetzwerks mit einer Mehrzahl von Subnetzwerken, insbesondere von Punkt-zu-Punkt-Subnetzwerken, wobei das Subnetzwerk zum Verteilen von einem Datenvolumen, das einer Gruppe von elektronischen Teilnehmeridentitätsmodulen zugeordnet ist, vorgesehen ist, wobei die Gruppe von elektronischen Teilnehmeridentitätsmodulen ein erstes Teilnehmeridentitätsmodul (101) und ein zweites Teilnehmeridentitätsmodul (102) aufweist, mit:
dem Steuerungsserver (100) nach einem der Ansprüche 1 bis 11, wobei der Steuerungsserver ausschließlich über das Subnetzwerk adressierbar ist.

15. Subnetzwerk (200) nach Anspruch 14, das ein Punkt-zu-Punkt-Subnetzwerk oder ein Slice eines 5G-Kommunikationsnetzwerks ist.

16. Subnetzwerk (200) nach Anspruch 14 oder 15, wobei der Steuerungsserver (100) ausgebildet ist, eine Angabe über das erste Teildatenvolumen an ein weiteres Subnetzwerk (201) des Kommunikationsnetzwerks auszusenden, das für eine Kommunikation des ersten elektronischen Teilnehmeridentitätsmoduls (101) vorgesehen ist, und/oder wobei der Steuerungsserver (100) vorgesehen ist, eine Angabe über das zweite Teildatenvolumen an ein weiteres Subnetzwerk (202) des Kommunikationsnetzwerks auszusenden, das für eine Kommunikation des zweiten elektronischen Teilnehmeridentitätsmoduls (102) vorgesehen ist.

## Claims

1. Control server (100) in a communication network, wherein the control server is provided for the purpose of distributing a data volume assigned to a group of electronic subscriber identity modules, wherein the group of electronic subscriber identity modules has a first subscriber identity module (101) and a second subscriber identity module (102), having:
a communication interface (103) for receiving a first identification of the first subscriber identity module (101) and/or a second identification of the second subscriber identity module (102); and
a processor (105) which is configured to assign a first partial data volume of the data volume to the first electronic subscriber identity module (101) and/or to assign a second partial data volume of the data volume to the second electronic subscriber identity module (102) according to an electronic distribution rule.

2. Control server (100) according to Claim 1, wherein the processor (105) is configured to determine the first partial data volume and/or the second partial data volume or to read it/them from a memory of the control server (100).

3. Control server (100) according to one of the preceding claims, wherein the processor (105) is configured to determine the first partial data volume and/or the second partial data volume according to a volume distribution key which predefines the distribution of the data volume to the electronic subscriber identity modules (101, 102) in the group of electronic subscriber identity modules and is assigned to the group of electronic subscriber identity modules.

4. Control server (100) according to one of the preceding claims, wherein the processor (105) is configured to determine the first partial data volume and/or the second partial data volume on the basis of a used data volume assigned to the first electronic subscriber identity module (101) and a used data volume assigned to the second electronic subscriber identity module (101).

5. Control server (100) according to Claim 4, wherein a first basic data volume is assigned to the first electronic subscriber identity module (101) and/or wherein a second basic data volume is assigned to the second electronic subscriber identity module (102), and wherein the processor (105) is configured to determine the first partial data volume on the basis of a residual data volume resulting from a difference between the first basic data volume and the residual data volume and/or to determine the second partial data volume on the basis of a residual data volume resulting from a difference between the second basic data volume and the residual data volume.

6. Control server (100) according to Claim 5, wherein the processor (105) is configured to determine the respective partial data volume if the respective residual data volume reaches or undershoots a volume threshold value.

7. Control server (100) according to one of the preceding claims, wherein the processor (105) is configured to determine the first partial data volume and/or the second partial data volume on the basis of a data volume usage per unit time, which is assigned to the first electronic subscriber identity module (101) and/or to the second electronic subscriber identity module (102), or on the basis of a communication application, in particular a real-time application, which is assigned to the respective subscriber identity module (101, 102), or on the basis of an electronic service assigned to the respective subscriber identity module (101, 102).

8. Control server (100) according to one of the preceding claims, wherein the processor (105) is configured to determine the first partial data volume and/or the second partial data volume in a predetermined manner, in particular in a provisioned manner, or dynamically on the basis of a current data volume usage assigned to the respective electronic subscriber identity module (101, 102).

9. Control server (100) according to Claim 8, wherein the communication interface (103) is configured to receive an indication of the respectively used data volume from a network entity, in particular from a base station.

10. Control server (100) according to one of the preceding claims, wherein the communication interface (103) is configured to transmit an indication of the first partial data volume and/or an indication of the second partial data volume to a network entity, which monitors a data volume usage, or to a base station.

11. Control server (100) according to one of the preceding claims, wherein the first identification is an electronic identification (eID) or a subscriber identifier, in particular an IMSI, of the first electronic subscriber identity module (101), and wherein the second identification is an electronic identification (eID) or a subscriber identifier, in particular an IMSI, of the second electronic subscriber identity module (102), and/or wherein the respective electronic subscriber identity module is an eSIM.

12. Method for distributing a data volume assigned to a group of electronic subscriber identity modules, wherein the group of electronic subscriber identity modules has a first subscriber identity module (101) and a second subscriber identity module (102), comprising:
receiving a first identification of the first subscriber identity module (101) and/or a second identification of the second subscriber identity module (102) ;
assigning a first partial data volume of the data volume to the first electronic subscriber identity module (101); and/or
assigning a second partial data volume of the data volume to the second electronic subscriber identity module (102).

13. Method according to Claim 12, wherein the first partial data volume and/or the second partial data volume is/are assigned and/or determined by a control server, in particular by the control server (100) according to one of Claims 1 to 11.

14. Subnetwork (200) of a communication network having a plurality of subnetworks, in particular point-to-point subnetworks, wherein the subnetwork is provided for the purpose of distributing a data volume assigned to a group of electronic subscriber identity modules, wherein the group of electronic subscriber identity modules has a first subscriber identity module (101) and a second subscriber identity module (102), having:
the control server (100) according to one of Claims 1 to 11, wherein the control server can only be addressed via the subnetwork.

15. Subnetwork (200) according to Claim 14, which is a point-to-point subnetwork or a slice of a 5G communication network.

16. Subnetwork (200) according to Claim 14 or 15, wherein the control server (100) is configured to transmit an indication of the first partial data volume to a further subnetwork (201) of the communication network which is provided for communication of the first electronic subscriber identity module (101), and/or wherein the control server (100) is provided for the purpose of transmitting an indication of the second partial data volume to a further subnetwork (202) of the communication network which is provided for communication of the second electronic subscriber identity module (102).

## Revendications

1. Serveur de commande (100) dans un réseau de communication, le serveur de commande étant conçu pour la distribution d'un volume de données qui est associé à un groupe de modules d'identité d'abonné électroniques, le groupe de modules d'identité d'abonné électroniques possédant un premier module d'identité d'abonné (101) et un deuxième module d'identité d'abonné (102), comprenant :
une interface de communication (103) destinée à recevoir une première identification du premier module d'identité d'abonné (101) et/ou une deuxième identification du deuxième module d'identité d'abonné (102) ; et
un processeur (105) qui est configuré pour associer au premier module d'identité d'abonné (101) un premier volume de données partiel du volume de données et/ou au deuxième module d'identité d'abonné (102) un deuxième volume de données partiel du volume de données conformément à une règle de distribution électronique.

2. Serveur de commande (100) selon la revendication 1, le processeur (105) étant configuré pour déterminer le premier volume de données partiel et/ou le deuxième volume de données partiel ou les lire à partir d'une mémoire du serveur de commande (100).

3. Serveur de commande (100) selon l'une des revendications précédentes, le processeur (105) étant configuré pour déterminer le premier volume de données partiel et/ou le deuxième volume de données partiel conformément à une clé de distribution de volume qui prédéfinit la distribution du volume de données sur les modules d'identité d'abonné (101, 102) électroniques du groupe de modules d'identité d'abonné électroniques et qui est associée au groupe de modules d'identité d'abonné électroniques.

4. Serveur de commande (100) selon l'une des revendications précédentes, le processeur (105) étant configuré pour déterminer le premier volume de données partiel et/ou le deuxième volume de données partiel en fonction d'un volume de données consommé qui est associé au premier module d'identité d'abonné (101) électronique et d'un volume de données consommé qui est associé au deuxième module d'identité d'abonné (101) électronique.

5. Serveur de commande (100) selon la revendication 4, un premier volume de données de base étant associé au premier module d'identité d'abonné (101) électronique et/ou un deuxième volume de données de base étant associé au deuxième module d'identité d'abonné (102) électronique, et le processeur (105) étant configuré pour déterminer le premier volume de données partiel en fonction d'un volume de données restant qui résulte d'une différence entre le premier volume de données de base et le volume de données restant et/ou le deuxième volume de données partiel en fonction d'un volume de données restant qui résulte d'une différence entre le deuxième volume de données de base et le volume de données restant.

6. Serveur de commande (100) selon la revendication 5, le processeur (105) étant configuré pour déterminer le volume de données partiel respectif dans le cas où le volume de données restant respectif devient égal ou inférieur à une valeur de seuil de volume.

7. Serveur de commande (100) selon l'une des revendications précédentes, le processeur (105) étant configuré pour déterminer le premier volume de données partiel et/ou le deuxième volume de données partiel en fonction en fonction d'une consommation de volume de données par unité de temps, laquelle est associée au premier module d'identité d'abonné (101) électronique et/ou au deuxième module d'identité d'abonné (102) électronique, ou en fonction d'une application de communication, notamment une application en temps réel, qui est associé au module d'identité d'abonné (101, 102) respectif, ou en fonction d'un service électronique qui est associé au module d'identité d'abonné (101, 102) respectif.

8. Serveur de commande (100) selon l'une des revendications précédentes, le processeur (105) étant configuré pour déterminer le premier volume de données partiel et/ou le deuxième volume de données partiel de manière prédéterminée, notamment approvisionnée, ou dynamiquement en fonction d'une consommation de volume de données actuelle, laquelle est associée au module d'identité d'abonné (101, 102) électronique respectif.

9. Serveur de commande (100) selon la revendication 8, l'interface de communication (103) étant configurée pour recevoir une indication à propos du volume de données respectivement consommé de la part d'une identité de réseau, notamment d'une station de base.

10. Serveur de commande (100) selon l'une des revendications précédentes, l'interface de communication (103) étant configurée pour envoyer une indication à propos du premier volume de données partiel et/ou une indication à propos du deuxième volume de données partiel à une entité de réseau, laquelle surveille une consommation de volume de données, ou à une station de base.

11. Serveur de commande (100) selon l'une des revendications précédentes, la première identification étant une identification électronique (eID) ou un identificateur d'abonné, notamment une IMSI, du premier module d'identité d'abonné (101) électronique et la deuxième identification étant une identification électronique (eID) ou un identificateur d'abonné, notamment une IMSI, du deuxième module d'identité d'abonné (102) électronique et/ou le module d'identité d'abonné électronique respectif étant un eSIM.

12. Procédé de distribution d'un volume de données qui est associé à un groupe de modules d'identité d'abonné électroniques, le groupe de modules d'identité d'abonné électroniques possédant un premier module d'identité d'abonné (101) et un deuxième module d'identité d'abonné (102), comprenant :
réception d'une première identification du premier module d'identité d'abonné (101) et/ou une deuxième identification du deuxième module d'identité d'abonné (102) ;
association d'un premier volume de données partiel du volume de données au premier module d'identité d'abonné (101) électronique ; et/ou
association d'un deuxième volume de données partiel du volume de données au deuxième module d'identité d'abonné (102) électronique.

13. Procédé selon la revendication 12, le premier volume de données partiel et/ou le deuxième volume de données partiel étant associés et/ou déterminés par un serveur de commande, notamment par le serveur de commande (100) selon l'une des revendications 1 à 11.

14. Sous-réseau (200) d'un réseau de communication comprenant une pluralité de sous-réseaux, notamment de sous-réseaux point à point, le sous-réseau étant conçu pour la distribution d'un volume de données qui est associé à un groupe de modules d'identité d'abonné électroniques, le groupe de modules d'identité d'abonné électroniques possédant un premier module d'identité d'abonné (101) et un deuxième module d'identité d'abonné (102), comprenant :
le serveur de commande (100) selon l'une des revendications 1 à 11, l'adressage du serveur de commande pouvant être effectué exclusivement par le biais du sous-réseau.

15. Sous-réseau (200) selon la revendication 14, lequel est un sous-réseau point à point ou une tranche d'un réseau de communication 5G.

16. Sous-réseau (200) selon la revendication 14 ou 15, le serveur de commande (100) étant configuré pour envoyer indication à propos du premier volume de données partiel à un sous-réseau supplémentaire (201) du réseau de communication, lequel est conçu pour une communication du premier module d'identité d'abonné (101) électronique et/ou le serveur de commande (100) étant configuré pour envoyer indication à propos du deuxième volume de données partiel à un sous-réseau supplémentaire (202) du réseau de communication, lequel est conçu pour une communication du deuxième module d'identité d'abonné (102) électronique.
